# EUROPÄISCHE PATENTSCHRIFT

(11) **EP 1 118 451 B1**
(45) Veröffentlichungstag und Bekanntmachung des Hinweises auf die Patenterteilung: **04.05.2005**
(21) Anmeldenummer: 01100725.9
(22) Anmeldetag: 12.01.2001
(51) Int. Cl.: B29C 70/08, B29C 70/88, B32B 15/08

(54) **Metall- und Kunststoffverbund aus langglasfaserverstärktem Polypropylen**
Metal and plastic laminate from polypropylene reinforced with long glass fibres
Composé multicouche en matière métallique et polypropylène renforcée par des fibres de verre longues

(30) Priorität: 21.01.2000 DE 10002642
(43) Veröffentlichungstag der Anmeldung: 25.07.2001
(60) Teilanmeldung: 04013327.4
(73) Patentinhaber: Ticona GmbH, 65451 Kelsterbach (DE)
(72) Erfinder: Pfeiffer, Bernhard, Dr., 65510 Wallbach (DE); Haack, Ulrich, 64665 Alsbach (DE)

(56) Entgegenhaltungen:
- WO-A-84/04762
- DE-A- 3 011 336

## Beschreibung

Die vorliegende Erfindung betrifft ein Bauteil aus langfaserverstärkten Thermoplasten, welches durch einen Verbund von Metall- und Kunststoffstrukturen gekennzeichnet ist.
Die fortschreitende Automatisierung bei der Montage von Kraftfahrzeugen macht es notwendig oder mindestens hochgradig wünschenswert, daß zusammengehörende Montageeinheiten aus starren und beweglichen Teilen möglichst schon vor ihrem endgültigen Einbau in das entstehende Kraftfahrzeug für sich zusammengefügt und auf ihre bestimmungsgemäße Funktionsfähigkeit geprüft werden können.

Üblicherweise bestehen tragende Strukturen im Fahrzeugbau und bei Industrieanwendungen aus Metallen. Dabei hat sich gezeigt, daß z. B. eine Kreuzverrippung erhebliche Steifigkeits- und Festigkeitssteigerungen hervorruft. Ein ähnlicher Metall-Kunststoffverbund wird in EP 0 370 342 B1 beschrieben. Hierdurch ist es möglich, die Wandstärke bei vorgegebener Last zu reduzieren und dadurch erheblich an Gewicht einzusparen.

Tragende Strukturen können hierbei als Montageträger dienen (Frontend, Türmodul, Armaturtafelträger). Hierzu werden sehr hohe mechanische Eigenschaften gefordert, die durch Metall-Kunststoffverbunde bereitgestellt werden können. Zusätzlich liefert thermoplastisch verarbeiteter Kunststoff den hohen Integrationsgrad, der kostengünstige Konstruktionen möglich macht.

Von Nachteil sind jedoch die Unterschiede der thermischen Ausdehnungskoeffizienten der dort verwendeten Kunststoffe und Metalle. Diese verursachen bei der Verarbeitung und bei Verwendung in Metall-Kunststoffverbunden, die in einem großen Temperaturbereich eingesetzt werden, innere Spannungen und Verzug, die eine niedrigere mechanische Belastbarkeit und raschere Materialermüdung bewirken. Diese Problematik wird in EP 0 370 342 B1, Spalte 2, Zeilen 15-18 angedeutet. Durch die Erwähnung der Tatsache, daß bei einem Metall-Kunststoffverbund der Wärmeausdehnungskoeffizient im Wesentlichen durch das Metall bestimmt wird, wurde auf die oben beschriebenen Nachteile geschlossen.

DE 38 18 478 A1 beschreibt einen Verbundwerkstoff enthaltend eine Metallschicht und eine mit einer Glasfasermatte faserverstärkte, vernetzte Polypropylenschicht mit einem ähnlichen thermischen Ausdehnungskoeffizienten wie das verwendete Metall. Nachteilig hierbei ist, daß durch die Verwendung eine Glasfasermatte und der Vernetzung die Verarbeitung im Spritzguß erschwert oder nicht möglich ist.Ein Recycling des Kunststoffes ist durch die Vernetzung ebenfalls nicht möglich.

In der WO 84/04762 wird ein Verbund aus glasfaserverstärktem Polyethersulfon und Kupfer offenbart, wobei Kunststoff und Metall vergleichbare thermische Ausdehnungskoeffizienten haben.

Aufgabe der Erfindung war die Herstellung von Metall-Polypropylen verbunden, in denen die verwendeten unvernetzten Polypropylenstrukturen ähnliche thermische Ausdehnungskoeffizienten wie die verwendeten Metalle besitzen und deren Festigkeiten und Steifigkeiten bei höchstens gleichem Gewicht über denjenigen reiner Metallstrukturen liegt.

Überraschenderweise wurde nun gefunden, daß langfaserverstärktes Polypropylen ähnliche thermische Ausdehnungskoeffizienten wie Stahl, Aluminium und Magnesium und eine geringere Kriechneigung als kurzfaserverstärktes Polypropylen besitzt Damit können Metall-Kunststoffverbunde mit Festigkeiten und Steifigkeiten hergestellt werden, die über denjenigen liegen, die eine reine Metallstruktur liefert, und deren Gewichte unter denen der reinen Metallstruktur liegen.
Gegenstand der Erfindung ist daher ein Metall-Polypropylen verbund enthaltend mindestens ein Metall und langfaserverstärktes Polypropylen mit einem ähnlichen thermischen Ausdehnungskoeffizienten wie das verwendete Metall. Als langfaserverstärktes Polypropylen bezeichnet man im Allgemeinen Polypropylen, das verstärkt ist mit glasfasern von mindestens 1 mm Länge, maximal 50 mm Länge. Bevorzugt liegt die Länge der Fasern zwischen 1 mm und 25 mm, insbesondere 1 mm bis 12 mm. Die Länge des Granulates und der Fasern sind bei diesen Materialien meist identisch.

Hierbei können die Fasern im Granulatkorn vollständig mit dem Thermoplasten imprägniert sein oder als kunststoffummanteltes Glasfaserbündel vorliegen.

Es werden Rippen aus Polypropylen in Metallstrukturen eingespritzt. Mit Polypropylen wurde der Thermoplast mit der geringsten Dichte ausgewählt. Durch Verwendung langer Fasern als Verstärkungsstoff können die metallähnlichen Ausdehnungskoeffizienten und eine geringe Kriechneigung erzielt werden, ohne daß der verwendete Thermoplast vernetzt werden mußte.
Das langfaserverstärkte Polypropylen besitzt mechanische Eigenschaften, die deutlich über denen kurzfaserverstärkten Polypropylens liefern.
Durch Verwendung langfaserverstärkten Polypropylens lassen sich extreme Festigkeits- und Steifigkeitssteigerungen, geringe Kriechneigung und ein metallähnlicher thermischer Ausdehnungskoeffizient erreichen.
Die Verbindungsstellen Metall-Polypropylen waren bei den beschriebenen Metall-Polypropylen verbunden so hoch belastet, daß auch hierbei die Festigkeits- und Steifigkeitsvorteile im Vergleich zu kurzglasfaserverstärkten Polypropylen erforderlich waren, um ein hochbelastbares Bauteil herzustellen.

Das erfindungsgemäße Bauteil kann im allgemeinen aus Metallstrukturen beliebiger Metalle, vorteilhaft aus Eisen und Stahl (auch hochlegiert oder korrosionsgeschützt), Aluminium, Magnesium oder Titan bestehen.
Zur besseren Haftung kann die Oberfläche vorteilhaft mit Haftvermittlern, Primern oder Oberflächenbeschichtungen versehen sein.

Als Kunststoffmaterial können neben neu produziertem Material auch Recyclate der ersten, zweiten oder höheren Generation oder Gemische aus neu produziertem Material mit Recyclaten verwendet werden. Solche Gemische können gegebenenfalls auch Zuschlagstoffe und Zusätze enthalten oder sie können durch Beimischung anderer kompatibler Polymere modifiziert sein. Der Zusatz von Vernetzern ist nicht notwendig um die erfindungsgemäßen Vorteile zu erreichen.

Das Polypropylen kann neben den langen Verstärkungsfasern noch weitere übliche Zusatz- und Verstärkungsstoffe enthalten, wie zum Beispiel weitere Fasern, insbesondere Metallfasern oder Mineralfasern, Verarbeitungshilfen, polymere Gleitstoffe, ultrahochmolekulares Polyethylen (PE-UHMW), Polytetrafluorethylen (PTFE) und Pfropf-Copolymer, welches ein Produkt einer Pfropfreaktion aus einem Olefin-Polymer und einem Acrylnitril/Styrol-Copolymer ist, Antioxidantien, Haftvermittler, Nukleierungsmittel, Entformungshilfen, Glaskugeln, mineralische Füllstoffe wie Kreide, Calciumcarbonat, Wollastonit, Siliciumdioxid, Talk, Glimmer, Montmorillonit, organisch modifiziert oder unmodifiziert, organisch modifizierte oder unmodifizierte Schichtsilikate, mit dem Kunststoffmaterial Nanokomposite bildende Materialien, Nylon-Nanokomposite oder Mischungen der vorgenannten Stoffe.

Der thermische Ausdehnungskoeffizient ist metallähnlich, wenn er um nicht mehr als 20 x 10⁻⁶K⁻¹ von dem thermischen Ausdehnungskoeffizienten des verwendeten Metalles abweicht.

Die Polypropylen trukturen können durch thermoplastische Verarbeitungsverfahren, vorzugsweise durch herkömmliche Techniken wie Spritzguß, Thermoformen, Heißpressen, Spritzprägen, Niederdruckspritzgießen oder Blasformen hergestellt werden.

Die Metallstrukturen besitzen vorzugsweise einen Querschnitt in Form eines U, V oder W. Innerhalb dieser Metallstrukturen das Polypropylen beliebige Formen bis hin zu flächigen Schichten ausbilden und mit Funktionsteilen wie Gehäusen oder Gehäuseteilen, Schnappverbindungen und Filmscharnieren versehen sein. Die Funktionsteile können wegen des guten Abriebverhaltens gegenüber Polypropylen und Metall vorteilhaft als Gleitflächen ausgebildet sein. Bevorzugt haben die Kunststoffstrukturen die Form von Rippen.

Die Metall-Polypropylen-Verbindung wird erfindungsgemäß auf zwei verschiedene Arten hergestellt. Bei der erste Methode wird bei einem der thermoplastischen Verarbeitungsverfahren innerhalb der Metallstruktur eine Verbindung hervorgerufen.
Bevorzugt wird die Verbindung durch Formschluß, Hinterschnitt (z. B. in Form eines Schwalbenschwanzes) oder Durchdringen eines Loches oder Schlitzes hergestellt, wobei auf der Rückseite des Loches ein Pfropf entsteht, der ohne Zerstörung nicht mehr durch das Loch gezogen werden kann.
Bei der zweiten Möglichkeit wird die Metall-Kunststoff Verbindung durch Einbringen von zapfenförmigen oder anderweitig ausgebildeten Erhebungen auf dem Kunststoffteil in Aussparungen der Metallstruktur wie zum Beispiel Löchern oder Schlitzen bewirkt. Vorteilhaft wird durch anschließendes Thermoschweißen, Umbugen oder thermisches Verformen eine unlösbare Verbindung hergestellt.
Langglasfaserverstärktes Polypropylen besitzt ähnliche thermische Ausdehnungskoeffizienten wie Stahl, Aluminium und Magnesium (Tabelle 1).

**Tab. 1:**

| | |
|---|---|
| Thermische Ausdehnungskoeffizienten langfaserverstärkter Thermoplaste (-30 °C bis 30 °C) PP-Polypropylen, PA-Polyamid, PET-Polyethylenterephthalat, PBT-Polybutylenterephthalat, PPS-Polyphenylensulfid, PC/ABS-Polycarbonat-ABS-Blend, TPU-Thermoplastisches Polyurethan, GF-Glasfaser, CF-Kohlefaser | |

| Werkstoff (Kunststoff-Faser Menge Verstärkungsfaser /Gew.-%) | Ausdehnungskoeffizienten |
|---|---|
| | 10⁻⁶ K⁻¹ |
| PP-GF 30 | 16 |
| PP-GF 40 | 15 |
| PP-GF 50 | 13 |
| PA66-GF 40 (nicht erfindungsgemäß) | 19 |
| PA66-GF 50 " | 17 |
| PA66-GF 60 " | 15 |
| PA66-CF40 " | 13 |
| PET-GF 40 " | 16 |
| PBT-GF 40 " | 19 |
| PPS-GF 50 " | 12 |
| PC/ABS-GF 40 " | 18 |
| TPU-GF 40 " | 13 |
| TPU-GF 50 " | 10 |
| TPU-CF 40 " | 18 |
| Vergleich mit Metallen | |
| Eisen | 12,2 |
| Stahl | 12 |
| Magnesium | 26 |
| Aluminium | 22 |
| Vergleich mit unverstärkten Kunststoffen | |
| PP unverstärkt | 83 |
| PA66 unverstärkt | 90 |

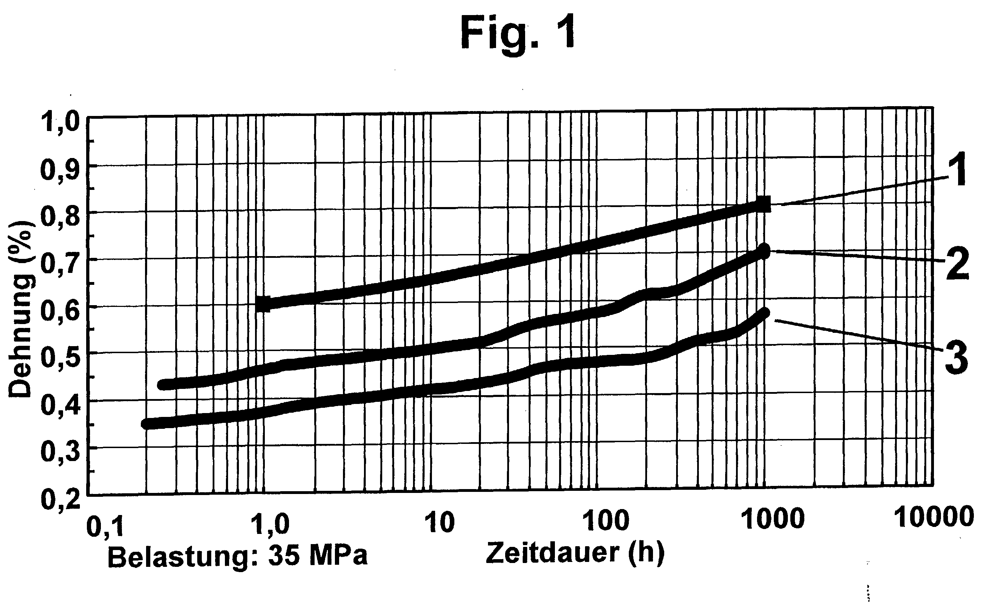

Langfaserverstärktes Polypropylen, besitzt außerdem eine geringere Kriechneigung als kurzfaserverstärktes Polypropylen. Die Erfindung wird anhand der Figur 1 näher erläutert. In Figur 1 ist die prozentuale Dehnung gegen die Zeitdauer der Belastung aufgetragen. Kurve 1 stellt zum Vergleich das Kriechverhalten eines kurzglasfaserverstärkten Polyamids 6,6 mit einem Glasfaseranteil von 30% dar, Kurven 2 und 3 das Kriechverhalten von langglasfaserverstärktem Polypropylen mit einem Glasfaseranteil von 40% und 50%.
Aufgrund des Kriechverhaltens und des thermischen Ausdehnungskoeffizienten ist langglasfaserverstärktes Polypropylen insbesondere geeignet zur Verwendung in Metall-Kunststoffverbunden, die in einem großen Temperaturbereich eingesetzt werden, wie es z. B. in der Fahrzeugindustrie der Fall ist (-40 bis + 120 °C).

## Patentansprüche

1. Tragende Strukturen für den Fahrzeugbau und Industrieanwendungen enthaltend mindestens ein Metall und unvernetztes Polypropylen, das 30-50 gew.-% Glasfasern einer Länge von 1 mm bis 50 mm enthält und das einen thermischen Ausdehnungskoeffizienten besitzt, der um nicht mehr als 20x10⁻⁶ K⁻¹ von dem des verwendeten Metalls abweicht.

2. Tragende Strukturen gemäß Anspruch 1, erhältlich durch herkömmliche thermoplastische Verarbeitungsverfahren wie Spritzguß, Thermoformen, Heißpressen, Spritzprägen, Niederdruckspritzguß oder Blasformen.

3. Tragende Strukturen gemäß Anspruch 1 oder 2, wobei als Metall Eisen, Stahl, Aluminium, Magnesium, Titan verwendet wird.

4. Tragende Strukturen gemäß einem der Ansprüche 1 bis 3, die als Montageträger dienen in Frontends, Türmodulen und Armaturtafelträgern.

## Claims

1. Load-bearing structures for vehicle construction and industrial applications comprising at least one metal and non-crosslinked polypropylene which comprises 30-50 % by weight of glass fibres of length from 1 to 50 mm and which has a coefficient of thermal expansion differing from that of the metal used by not more than 20 × 10⁻⁶ K⁻¹.

2. Load-bearing structures according to Claim 1, obtainable via conventional thermoplastic processing methods such as injection moulding, thermoforming, hotpress moulding, injection-compression moulding, low-pressure injection moulding or blow moulding.

3. Load-bearing structures according to Claim 1 or 2, where the metal used comprises iron, steel, aluminium, magnesium, titanium.

4. Load-bearing structures according to one of Claims 1 to 3, serving as assembly supports in front ends and in door modules and dashboard supports.

## Revendications

1. Structures portantes pour construction automobile et applications industrielles, contenant au moins un métal et du polypropylène non réticulé, contenant de 30 à 50 % en poids de fibres de verre d'une longueur de 1 mm à 50 mm et possédant un coefficient de dilatation thermique ne différant pas de plus de 20 x 10⁻⁶ K⁻¹ de celui du métal utilisé.

2. Structures portantes selon la revendication 1, que l'on peut obtenir par des procédés conventionnels de travail des thermoplastiques tels que le moulage par injection, le thermoformage, le pressage à chaud, le gaufrage à chaud, le moulage par injection basse pression ou le moulage par soufflage.

3. Structures portantes selon la revendication 1 ou 2, dans lesquels on utilise comme métal du fer, de l'acier, de l'aluminium, du magnésium, du titane.

4. Structures portantes selon l'une quelconque des revendications 1 à 3, utilisées comme supports de montage dans des avant-trains, des modules de portière et des supports pour tableaux de bord.
